# EUROPÄISCHE PATENTSCHRIFT

(11) **EP 0 624 787 B1**
(45) Veröffentlichungstag und Bekanntmachung des Hinweises auf die Patenterteilung: **27.11.2002**
(21) Anmeldenummer: 94104137.8
(22) Anmeldetag: 17.03.1994
(51) Int. Cl.: G01N 21/88

(54) **Verfahren und Einrichtung zur zerstörungsfreien Oberflächen-Inspektion**
Method and device for non-distructive testing of surfaces
Procédé et dispositif pour de contrôle non destructif de surfaces

(30) Priorität: 29.03.1993 CH 95093
(43) Veröffentlichungstag der Anmeldung: 17.11.1994
(73) Patentinhaber: TENCOR INSTRUMENTS, Mountain View, CA 94043 (US)
(72) Erfinder: Marxer,Norbert, FL-9486 Schaanwald (LI)
(74) Vertreter: Fiener, Josef

(56) Entgegenhaltungen:
- DE-A- 3 626 724
- DE-A- 4 134 747
- US-A- 4 378 159
- US-A- 4 441 124
- US-A- 4 464 050
- US-A- 4 508 450
- US-A- 4 598 997
- US-A- 4 794 264
- SOLID STATE TECHNOLOGY, Bd.25, Nr.4, 1. April 1982 Seiten 83 - 84 N 'WAFER SURFACE DEFECT AND CONTAMINATION DETECTOR'
- PATENT ABSTRACTS OF JAPAN vol. 13, no. 332 (P-905) (3680) 26. Juli 1989 & JP-A-01 096 537 (HITACHI ELECTRON) 14. April 1989
- PATENT ABSTRACTS OF JAPAN vol. 6, no. 137 (P-130) (1015) 24. Juli 1982 & JP-A-57 059 153 (HITACHI ZOSEN) 9. April 1982
- PATENT ABSTRACTS OF JAPAN vol. 13, no. 502 (P-958) (3850) 13. November 1989 & JP-A-01 201 143 (HITACHI) 14. August 1989
- PATENT ABSTRACTS OF JAPAN vol. 12, no. 377 (P-768) (3224) 7. Oktober 1988 & JP-A-63 122 935 (TOSHIBA CORP.) 26. Mai 1988

## Beschreibung

Die Erfindung betrifft ein Verfahren und eine Einrichtung zur zerstörungsfreien Oberflächen-Inspektion. zur Messung von kleinen Partikeln. Defekten und Inhomogenitäten, die sich auf der Oberfläche und oder in oberflächennahen Bereichen eines Messobjektes, insbesondere eines Silizium Wafers befinden, mit einer einen Beleuchtungsstrahl erzeugenden Lichtquelle, einer Strahlumlenkung, einer zu einem senkrecht auf das Messobjekt einfallenden Beleuchtungsfleck führenden Projektionsoptik, einem Photodetektor, auf den das gesammelte Licht gerichtet wird, und einer Einrichtung mit der das Messobjekt durch eine koordinierte Translations- und Rotationsbewegung derart bewegt wird, dass die gesamte Oberfläche vom Beleuchtungsfleck spiralförmig abgetastet wird.

Mit derartigen Verfahren und/oder Einrichtungen lassen sich beispielsweise in der Mikroelektronik Oberflächen von Wafern. Magnetspeichermedien und/oder Substraten für optische Anwendungen zerstörungsfrei auf etwa vorhandene Partikel und/oder Defekte kontrollieren bzw. inspizieren.

Die Entwicklung von Waferbelichtungsverfahren führte dazu, dass immer kleinere Strukturen auf den entsprechenden Waferoberflächen hergestellt werden. Parallel zu dieser Entwicklung steigt die Bedeutung von Inspektionssystemen, mit deren Hilfe immer kleinere Defekte und Partikel nachgewiesen werden können. Neben Partikeln, die etwa 75 % des Ausschusses bei der IC Produktion verursachen. müssen auch viele andere Arten von Inhomogenitäten (Schichtdickenverteilungen, Kristalldefekle an und unter der Oberfläche, u.s.w.) detektiert werden.

So müssen bei der Endinspektion die Waferhersteller und bei der Eingangskontrolle die Chiphersteller den unstrukturierten und unbeschichteten Wafer genauestens auf Partikelkontamination, Kristalldefekte, Rauhigkeit, Polierkratzer u.s.w. untersuchen. Bei dieser Aufgabe hat das Messobjekt eine optimal polierte Oberfläche, sodass diese sehr wenig Streulicht erzeugt.

Bei der Chipherstellung ist es gebräuchlich, die einzelnen Prozessschritte zu überwachen, um frühzeitig Problemstellen zu erkennen und damit grösseren Ausschuss zu vermeiden. Eine Möglichkeit der Prozessüberwachung ist die Verwendung von sogenannten Monitorwafern, die gewisse Prozessschritte mitmachen, jedoch nicht strukturiert werden. Durch den Vergleich zweier Messungen, wobei eine vor dem Prozessschritt und eine andere nach dem Prozessschritt durchgeführt wird, kann so zum Beispiel die Partikelkontamination durch den Prozessschritt bestimmt oder auf die Gleichmässigkeit des Prozessschrittes (zum Beispiel der Schichtdickenverteilung über den ganzen Wafer) geschlossen werden Bei diesen Untersuchungen kann es sich um rauhe, metallisierte Oberflächen handeln, die sehr viel Streulicht erzeugen. Es kann sich aber auch um filmbeschichtete Oberflächen. wo Inlerferenzerscheinungen zu beachten sind. handeln.

Idealerweise wird zur Überwachung der Prozessschritte jedoch der strukturierte Wafer untersucht. Da sich strukturierte und unstrukturierte Wafer nicht immer gleich verhalten, kann die Untersuchung von Monitorwafern oft nicht als repräsentativ für den wirklichen Prozess angesehen werden. Bei solchen Untersuchungen kommt erschwerend hinzu, dass das von den Strukturen gebeugte Licht das von Partikeln und Defekten gestreute Licht überlagert.

Für die zuvor beschriebenen Inspektionen eignen sich besonders sogenannte Laserscanner, die sich durch eine grosse Nachweisempfindlichkeit für kleine Defekte und einen hohen Durchsatz auszeichnen. Die einzelnen Laserscanner unterscheiden sich hauptsächlich durch die Art der Abtastung, die optische Konfiguration und die Datenverarbeitung.

Für Anwendungen, die einen hohen Durchsatz und 100%-tige Inspektion der ganzen Waferoberfläche verlangen, gibt es zwei Verfahren, die hauptsächlich angewendet werden. Beim ersten Verfahren (z.B.:US-PS **4,314,763**) ist der Beleuchtungsstrahl und die Sammeloptik statisch und das Messobjekt wird -mittels einer koordinierten Translations- und Rotationsbewegung des Messobjektsspiralförmig abgetastet. Beim zweiten Verfahren (z.B.: US-PS **4,378,159**) wird der Beleuchtungsstrahl mit einem rotierenden oder vibrierenden Spiegel in einer Richtung linear auf dem Wafer hinund herbewegt und -mittels gleichzeitiger Translationsbewegung des Messobjekts in einer dazu senkrechten Richtung- der ganze Wafer abgetastet.

Die Vorteile des Spiralabtast-Verfahrens sind:
· die Optik enthält keine beweglichen Teile und ist damit einfacher;
· der Beleuchtungsfleck und der Sammelbereich sind während der ganzen Messung konstant, d.h. homogene Empfindlichkeit über das ganze Messobjekt;
· die Bestimmung der genauen Streufleckposition auf dem Messobjekt aus dem Rotationswinkel und der Translationsdistanz ist einfacher als die Berechnung dieser Position aus der Spiegellage und der Translationsdistanz:
· es wird weniger Platz benötigt, da das Messobjekt nur um seinen Radius verschoben werden muss:
· beim Übergang zu grösseren Messobjekten muss die Optik nicht angepasst. sondern nur der Verfahrweg der Translationsbühne vergrössert werden.

Die Vorteile der Bewegung des Beleuchtungs-Strahls mittels Spiegel sind:
die Bewegung des Messobiekts ist nur in einer Richtung und damit einfacher;
die Abtastung kann üblicherweise schneller erfolgen.

Weil bei letzterem Abtastverfahren der Beleuchtungsfleck über das Messobjekt und damit die Streulichtquelle relativ zur Sammeloptik bewegt wird, ist eine gleichmässige Messemplindlichkeit nicht gewährleistet. Ebenso ist ein rotationssymmetrischer Aufbau der Sammeloptik nicht möglich. Dies sind damit wesentliche Nachteile eines so konfigurierten Laserscanners.

Beim Einsatz eines Laserscanners mit der oben beschriebenen Spiralabtastung sind verschiedene optische Konfigurationen bekannt:
Beispielsweise ist gemäss der **US-PS 4,893,932** eine Anordnung bekannt, in der zwei Laser unterschiedlicher Polarisation und zwei entsprechende Detektoren vorgesehen sind. Die Streulichtintensität von Kugeln als Funktion der Kugeldurchmesser hat Oszillationen für Durchmesser im Bereich der verwendeten Wellenlänge und ist streng monoton steigend für kleinere Durchmesser. Der Einsatz von unterschiedlich polarisiertem Licht verkleinert die Fehler bei der Zuordnung von Streulichtintensität zu Partikeldurchmesser für Polystyrene Latex Kugeln, die zur Kalibration von Laserscannern verwendet werden.
In der Praxis hängt jedoch die Zuordnung von Streulichtintensitäten zu Partikeldurchmessern von so vielen Faktoren (Substratmaterial. vorhandene Filme. Partikelmaterial. Oberflächenstruktur der Partikel usw.) ab, sodass eine auf Polystyrene Latex Kugeln zugeschnittene Optik und Kalibration des Gerätes die Interpretation der Resultate eher erschwert.
Ein weiterer wesentlicher Nachteil dieses Verfahrens ist die Tatsache, dass durch den Schräglichteinfall und die lineare Polarisation des Laserlichts die Symmetrie gebrochen wird. Das Messsignal hängt dadurch von der Orientierung des Defekts ab.

Durch die **JP 63'14'830** ist eine Sammeloptik aus jeweils sechs konzentrisch ringförmig angeordneten faseroptischen Lichtleitern, die auf einen Photomultiplier geführt werden, bekannt geworden. Nachteilig bei dieser Anordnung ist, dass der achsennahe Bereich nicht erfasst wird, zudem wird durch diskrete Anordnung eine Rotationssymmetrie nur approximativ erreicht.

In der **US-PS 5,189,481** wird ein Universalaufbau. mit dem eine Vielzahl verschiedenster Messungen durchgeführt werden kann, beschrieben. Eine der Messmethoden benutzt eine Spiralabtastung mit einem Einfallswinkel von ca. 0 Grad, wobei das Licht mittels einer Coblentz Kugel eingesammelt wird. Der Sammelwinkelbereich ist sehr gross und die Streulichtintensität wird als Mass für die Oberflächenrauhigkeit des Messobjekts benutzt. Nachteilig ist bei solchen Messmethoden, dass nur sehr wenig Platz für einen Detektor vorhanden ist, sodass der Einsatz eines Photomultipliers, der zur Detektion kleinster Partikel mit Vorteil eingesetzt wird, nicht möglich ist. Ausserdem wird bei dieser Methode die Rotationssymmetrie gebrochen, da der Detektor ausserhalb des einfallenden Strahls angeordnet sein muss.

Wohl ist in der **US-PS 4,508,450** ein rotationssymmetrischer optischer Aufbau offenbart. Allerdings ist die dabei gewählte Methode so, dass das direkt reflektierte Licht gemessen wird. Dabei hat sich nun als sehr nachteilig erwiesen, dass mit dieser Konfiguration nur sehr grosse Defekte und Oberflächeninhomogenitäten erfassbar sind.

Durch die **EP-A-0'290'228** ist eine Anordnung, bei der gestreutes Licht auf zwei Detektoren geleitet wird, bekannt geworden. Der erste Detektor sammelt Licht, das um ca. 40 bis 100 mrad abgelenkt und der zweite Detektor sammelt solches, das um mehr als 100 mrad gestreut wurde. Eine solche winkelaufgelöste Messung mittels zweier Detektoren ermöglicht eine Defektklassifikation. Der Sammelwinkelbereich ist jedoch beschränkt und daher lassen sich sehr kleine Defekte nicht messen.

Eine ähnliche Lösung zeigt die **DE-A-41'34'747**, wo zwei als Arrays aufgebaute Detektoren vorgesehen sind, wobei der eine die radiale und der andere die azimutale Lichtverteilung misst. Bei dieser Anordnung rotiert das Messobjekt und die Optik wird linear verschoben.

Ebenfalls eine winkelauflösende Streulichtmessung -mittels ringförmig angeordneter faseroptischer Elemente- zeigt die **DD 250'850**. Beide zuvor skizzierten Verfahren haben den Nachteil, dass der Sammelwinkel im Vergleich zur erfindungsgemässen Anordnung viel kleiner ist.

In der **US-PS 4'314'763** ist in diesem Zusammenhang ein Aufbau beschrieben, wo senkrechter Lichteinfall und Rotationssymmetrie der Sammeloptik um die Senkrechte des Messobjekts eine von der Orientierung des Defekts unabhängige Messung ermöglichen. Der Sammelwinkelbereich der eingesetzten Linsensysteme ist jedoch klein und damit der Nachweis sehr kleiner Partikel mit hohem Durchsatz nicht möglich.

In der **US-PS 4,598,997,** die vom gleichen Erfinder stammt, wird durch Zusatz einer speziellen Maske zum obigen Aufbau die Messung von strukturierten Oberflächen verbessert. Die Maske hat dabei die Aufgabe, die von den Strukturen gebeugten Strahlen zu unterdrücken.

Aus der US-A-4,464,050 Ist eine gattungsbildende Detektorvorrichtung zum optischen Erfassen von Oberflächenfehlem bekannt, wobei eine Probe mit einem Laserstrahl bestrahlt wird. Die direkt reflektierten und die gestreuten Strahlen werden hierbei durch eine Unse gesammelt und dann durch einen Spiegel voneinander getrennt, so daß diese getrennt voneinander durch zwei separate Detektoren erfaßt werden.

In der JP-A-57/059 153 wird ein Detektor zum Erfassen von Oberflächeneigenschaften beschrieben, wobei ein Laserstrahl auf eine zu untersuchende Oberfläche gelenkt wird, dort reflektiert wird und Streustrahien durch einen Hohlzylinder auf einen Uchtdetektor gelenkt werden, während direkt reflektierte Strahlen durch eine Abschlrmplatte ausgesondert werden.

Auch die JP-A-01/201 143 bezieht sich auf einen Detektor zur Untersuchung extrem kleiner Fremdkörper auf einer Schutzschicht eines Schaltkreises, wobei ein Laserstrahl auf die Probenoberfläche gelenkt wird und die reflektierten Streustrahlen mit den Innenflächen einer Hohlkugel auf ein photoelektrisches Element gelenkt werden. Auch hier werden lediglich die Streustrahlen erfaßt, während die direkt reflektierten Strahlen ohne Bedeutung sind.

Die DE-A-36 26 724 beschreibt eine Anordnung zur Oberflächenprüfung, wobei ein doppelt fokusslerendes optisches System mit einem Rotationsellipsoid vorgesehen ist. Auch hierbei werden nur die Streustrahlen erfaßt, da keine direkt reflektierenden Strahlen auf der optischen Achse vorgesehen sind.

Die JP-A-01/096 537 beschreibt die Verwendung von zwei Photomultpliern bzw. separate Photodetektoren ähnlich der gattungsbildenden US-A-4,464,050. Die Erfassung der Streustrahlung erfoigt dabei durch optische Glasfasern, die über der Probe beidseits des Beleuchtungssflecks montiert sind und an einen der beiden Photomultiplier angeschlossen sind.

Der Erfindung liegt damit die Aufgabe zugrunde, ein Verfahren und eine Einrichtung zu schaffen, die die Nachteile des zuvor skizzterten Standes der Technik vermeidet und eine erheblich grössere Messempfindlichkeit für Partikel auf zu inspizierenden Messobjekten autweist und die Hazeempfindlichkeit nicht beeinträchtigt Zudem soll auf einfache Art und Weise die Empfindlichkeit des Aufbaus der Einrichtung, die Streufleckgrösse und damit der Anteil des gestreuten Lichtes verändert werden können. Ausserdem soll ein möglichst grosser Anteil des gestreuten Lichtes unverfälscht zur Verfügung gestellt werden, damit je nach Inspektionsaufgabe auf flexible Art selektiv der relevante Streulichtanteil ausgekoppelt und weiterverarbeitet werden kann.

Die Aufgabe wird durch das Verfahren und die Einrichtung gemäß Patentanspruch 1 bzw. 2 gelöst.

Durch die Anwendung dieser Merkmale ergeben sich die wesentlichen Vorzüge der Erfindung:
- Durch die statische Anordnung der Projektions- und der Sammeloptik im Raum ist die Messempfindlichkeit auf der ganzen Oberfläche des Messobjekts konstant, wenn das Messobjekt parallel zu seiner Oberfläche bewegt wird;
- durch die bezüglich der Senkrechten zur Messobjektoberfläche rotationssymmetrischen Anordnung von einfallendem Strahl und Sammeloptik ist die Messempfindlichkeit unabhängig von der Orientierung eines Defekts, zum Beispiel eines Polierkratzers;
- durch die Verwendung eines rotationssymmetrisch aufgebauten elliptischen Spiegels wird ein sehr grosser Bereich zum Einsammeln des Streulichts erfassbar. Dies ist wichtig im Hinblick auf die Detektion von Partikeln in der Grössenordnung von 100 nm, die ziemlich gleichmässig in den ganzen Halbraum streuen;
- durch die entsprechende Linsenanordnung wird auch achsennahes Licht sammelbar, was besonders wichtig ist für die Detektion von Partikeln in der Grössenordnung von 1 µm, da solche Partikel eine grosse Vorwärts- und Rückwärtsstreuung haben;
- durch die Abbildung des vom Beleuchtungsfleck gestreuten Lichtes auf die erste Blende wird eine grosse Flexibilität bezüglich der Ausbildung verschiedenster Blendenkonfigurationen geschaffen und es werden ortsaufgelöste. winkelaufgelöste. Polarisations- und andere Messungen möglich, ohne dass der Beleuchtungsstrahl tangiert wird und ohne dass die zentrale Baugruppe der Einrichtung, bestehend aus dem elliptischen Spiegel. dem Linsensystem, der Strahlumlenkung und der Dunkelfeldblende, neu optimiert werden muss. Dies ist eminent wichtig, denn es muss beachtet werden, dass die Anforderungen an die Qualität dieser Komponenten recht hoch und die genaue Dimensionierung recht delikat ist. So ist zum Beispiel das von qualitativ besten Wafern stammende Haze etwa 50 ppb (d h. dass nur ein Bruchteil von 0.000'000'05 des eingestrahlten Lichtes in den Photosensor gestreut wird). Da für die Messung kleinster Partikel der Haze störend ist. muss darauf geachtet werden, diesen möglichst klein zu halten. Das heisst aber auch, dass von den optischen Komponenten stammendes Störlicht und Umgebungslicht bedeutend kfeiner als 50 ppb sein muss, damit die Messung nicht beeinflusst (verschlechtert!) wird.

Eine zusätzliche Verbesserung der Einrichtung kann durch den Einsatz unterschiedlicher Linsen der Projektionsoptik erreicht werden und unter Einsatz einer dritten Blende der Beleuchtungsfleck entsprechend auf der Messobjektoberfläche abgebildet werden, sodass eine grosse Flexibilität zur Erzeugung unterschiedlicher Form und Grössen des Beleuchtungsflecks geschaffen wird. Damit können also unterschiedliche Messempfindlichkeiten für Partikel, die von der Lichtleistungsdichte abhängen, eingestellt werden.

In einer vorteilhaften Weiterbildung der Erfindung in Form der Konfiguration der ersten Blende oder in der Anordnung von Lichtleitern, die oberhalb der ersten Blende vorgesehen werden
- kann eine Steigerung des Signal-Rausch-Verhältnisses für die Partikelmessung durch gezielte Auswahl des optimalen Winkelbereiches erreicht werden,
- kann eine Selektion oder Unterdrückung von Defekten mit bestimmtem Streuverhalten erzielt werden.
- kann eine Defektklassifikation durch winkelaufgelöste Streulichtmessung bei bekanntem Abstrahlverhalten der verschiedenen Defekte vorgenommen werden,
- kann die Auskopplung von bestimmten räumlichen Frequenzen der Oberfläche vorgenommen werden.

Bei Anordnung von Abschwächern oberhalb der ersten Blende kann in einer weiteren Konfiguration das Licht einfach reduziert werden, ohne den Projektions- oder Sammelstrahl zu beeinflussen, um den Photodetektor im optimalen Arbeitsbereich zu betreiben.

Im folgenden wird die Erfindung anhand eines in den einzelnen Figuren dargestellten Ausführungsbeispiels näher erläutert. Es zeigen:
- **Fig. 1**: eine Gesamtansicht einer Wafer-Inspektions-Einrichtung mit zwei Waferkassetten und einer automatischen Wafertransport- und -Mess-Vorrichtung.
- **Fig. 2**: eine Prinzipdarstellung des Standes der Technik,
- **Fig. 3 und 4**: Prinzipdarstellungen einer Anordnung aus dem Stand der Technik mit einem vorrichtungsgemässen Aufbau, und
- **Fig. 5**: ein Ausführungsbeispiel der erfindungsgemässen Anordnung.

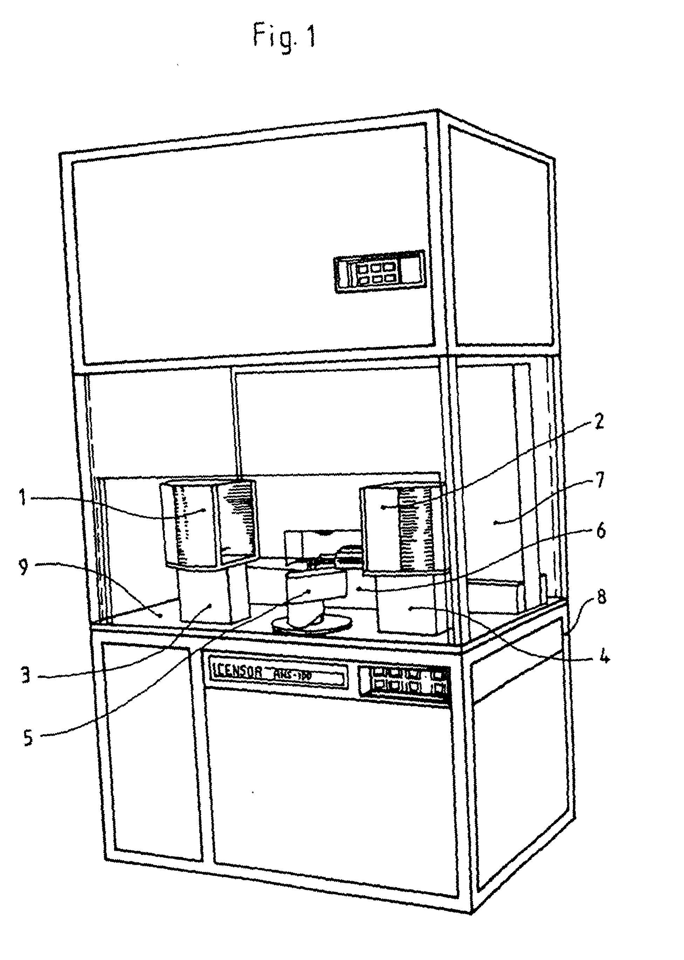

**Fig. 1** zeigt ein Substrat-Oberflächen-Inspektionsgerät, wie es hauptsächlich zur Inspektion von Wafern zur Anwendung kommt. Neben kleinsten Partikeln (im Bereich von 100nm) können mit solchen Einrichtungen Kristallfehler, metallische Verunreinigungen, Polierfehler, Kratzer. Implantationsinhomogenitäten und andere Inhomogenitäten auf Wafern visualisiert werden.

Es ist eine Voraussetzung für die Messung von sehr kleinen Partikeln in der Grössenordnung von 80 nm, dass die Messung in einer sehr sauberen Umgebung (z.B. "Klasse 1 Reinraum") stattfindet.

Die notwendige Reinheit zur Durchführung von solchen Messungen wird also beim Stand der Technik beispielsweise durch eine Flow-Box und ein aerodynamisch transparentes Design gewährleistet.

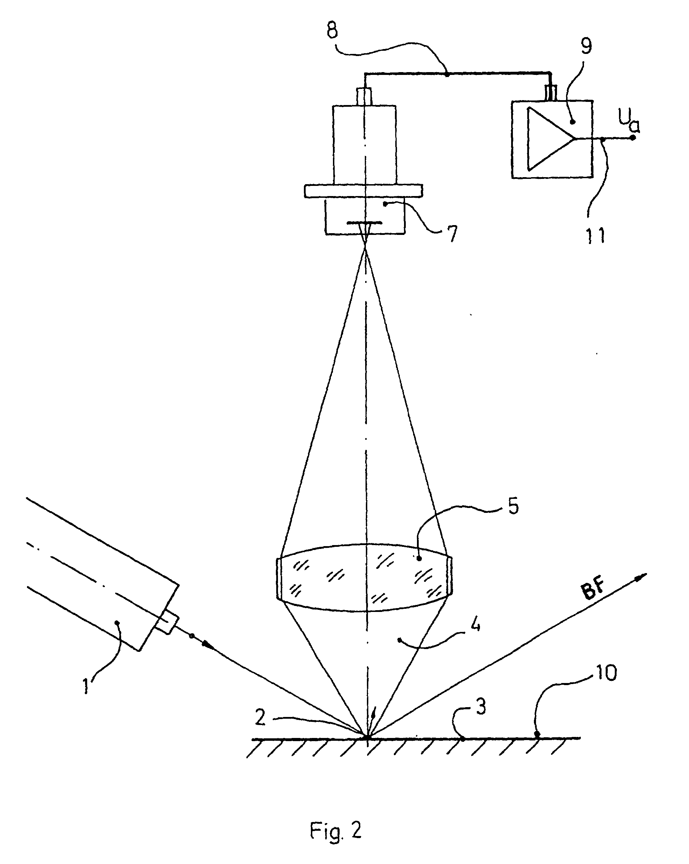

**Fig. 2** zeigt eine Prinzipdarstellung des Standes der Technik eines Oberflächen-Inspektionsgerätes. das auf dem Prinzip der Messung der elastischen Streuung beruht. Eine Lichtquelle (Laserlicht) **1** beleuchtet eine punktförmige Stelle **2** auf einer Wafer-Oberfläche **3.** Das reflektierte Licht verlässt die Anordnung in Richtung des Pfeiles BF. Ein Teil **4** des von der Oberfläche gestreuten Lichtes wird durch eine erste Linse **5** gesammelt und in einen Photodetektor **7** abgebildet. Ein Ausgangssignal **8** des Photodetektors **7** wird einem Verstärker **9** zugeführt. Dabei liegt nun die zu inspizierende Wafer-Oberfläche **3** in der sogenannten Fokus-Ebene **10**. Kommt nun an der beleuchteten Stelle **2** ein Defekt vor, so steigt der Anteil des gestreuten Lichtes **4** an und die Intensität des auf den Photodetektors **7** gelangenden Lichtes nimmt zu. Die Spannung (Ua) **11** am Ausgang des Verstärkers **9** steigt damit ebenfalls an.

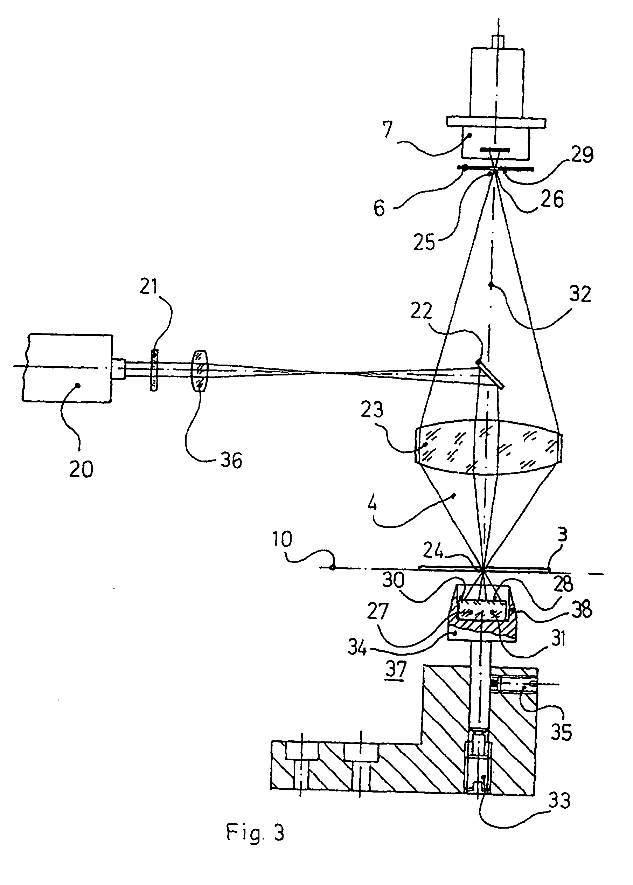

**Fig. 3** zeigt eine weitere Anordnung aus einer Oberflächen-Inspektions-Einrichtung. Das von einem Laser **20** ausgestrahlte Licht gelangt durch ein optisches Filter **21** (beispielsweise durch einen Abschwächer oder ein Neutralfilter) über eine Strahlumlenkung **22** (z.B.Spiegel oder Prisma) zu einer Sammellinse **23.**
Diese fokusiert das Licht zu einem Beleuchtungsfleck **24**. Dieser liegt in der Fokus-Ebene **10**. Während des Inspektionsvorganges liegt die zu inspizierende Wafer-Oberfläche **3** in der Fokus-Ebene **10.** Der von der Wafer-Oberfläche **3** gestreute Teil **4** des gestreuten Lichtes gelangt durch die Sammellinse **23** und die erste Blende **6** zum Photodetektor **7.** Die Oeffnung **25** der ersten Blende **6** liegt im Abbild **26** des Beleuchtungsflecks **24** - (konfokales System) und hat in etwa dessen Form. Während der Kalibrierphase wird ein Referenzmedium **27** vorzugsweise unterhalb der Fokus-Ebene **10** angeordnet.

Da damit das Referenzmedium **27** ausserhalb der Fokus-Ebene **10** liegt, ist ein zweiter beleuchteter Fleck **28** ausdehnungsmässig grösser als der erste beleuchtete Fleck **24** in der Fokus-Ebene **10.** Gleichfalls ist in der Kalibrierphase die so erhellte Stelle **29** am Ort der ersten Blende **6** grösser als das Abbild **26.**

Da die Oeffnung **25** der ersten Blende **6** immer noch gleich gross ist, gelangt nunmehr nur ein sehr geringer Anteil des gestreuten Lichtes durch die Oeffnung **25** der ersten Blende **6** zum Photodetektor **7.**

Mit Hilfe des optischen Filters **21** und/oder dem Verlagern aus der Fokus-Ebene **10** wird ein Abschwächmechanismus gebildet.

Durch die Verstellung der Position des Referenzmediums **27** entlang der optischen Achse **32** kann die Grösse der erhellten Stelle **29** an der Stelle der ersten Blende **6** variiert werden.

Bei konstanten Abmessungen der Oeffnung **25** der ersten Blende **6** kann somit die Menge der auf den Photodetektor **7** eintreffenden Energie reguliert werden.

Dabei ist ein Verstellmechanismus **37** vorgesehen, bei dem auf einer über eine Stellschraube **33** in der Höhe verstellbaren Auflage **34** das Referenzmedium **27**-bestehend aus Oberfläche **30** und Volumen **31**- angeordnet ist. Die höhenverstellbare Auflage weist einen Rand **38** auf.

Die Höheneinstellung lässt sich hier mittels einer Klemmschraube **35** fixieren.

Es ist im übrigen durchaus möglich, zwischen Lichtquelle **20** und Strahlumtenkung **22** wenigstens ein brechendes Element **36** (z.B. eine Linse) zu integrieren.

Natürlich können die hier in **Fig. 3, 4** und **5** beschriebenen Linsen, Laserquellen, Blenden, u.s.w. als ganze Systeme aufgebaut sein und sind das in der Praxis auch.
So kann zum Beispiel das von der Lichtquelle **20** abgestrahle Licht kohärent oder inkohärent, monochromatisch oder polychromatisch, unpolarisiert oder polarisiert (elliptisch, linear, zirkular) sein. Es kann sich damit also um einen oder um zwei Laser unterschiedlicher Wellenlängen, eine Quecksilberdampflampe verbunden mit einem Polarisator, einer λ/4 Platte u.s.w. handeln.
Ebenso kann mit Linse eine Einzellinse (sphärisch. zylindrisch) oder ein ganzes Linsen-System gemeint sein. Zudem können zwischen der Lichtquelle **20** und dem Umlenkspiegel **22** zusätzliche Spiegel angeordnet sein, um die Justage der Optik zu erleichtern.

In den einzelnen Figuren wurden diese Details, die beispielsweise zur Justage und/oder Kalibration erforderlich sind, der Übersichtlichkeithalber nicht dargestellt.

Auch wird vorausgesetzt, dass auf den Stand der Technik insbesondere auf die US-PS **4,314,763 (Stelgmeler et al)** zurückgegriffen werden kann, wenn das System des Transportes zur spiralförmigen Abtastung, dem eigentlichen Scannen der zu inspizierenden Waler, als zusammengesetzte Bewegung bestehend aus Translation und Rotation, angewendet wird, obwohl das eigentliche Prinzip als bekannt zu zählen hat.

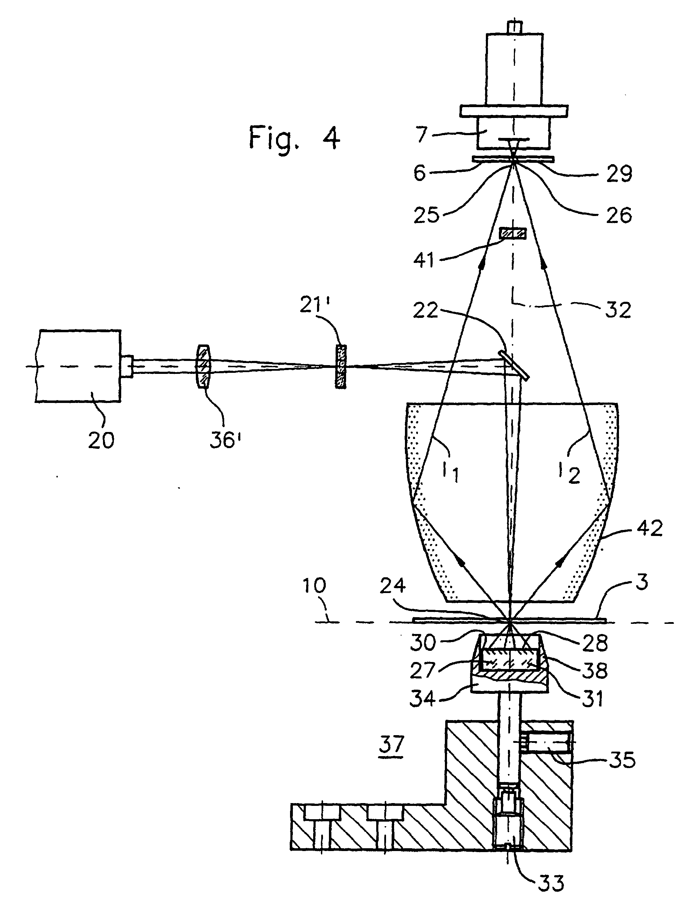

**Fig. 4** zeigt ein weiteres Beispiel der Einrichtung. Der Übersichtlichkeit halber wurden dabei die Bezugszeichen aus Fig. 3 übernommen. soweit es sich um identische Einrichtungsmerkmale in beiden Figuren handelt.

Dabei gelangt das von der Lichtquelle **20** abgestrahlte Licht über eine Projektionslinse **36'** und eine Spotblende **21'** via der Strahlumlenkung **22** zum Beleuchtungsfleck **24** auf dem Messobjekt (Wafer) **3.** Die Grösse und Form des Beleuchtungsflecks **24** wird damit allein durch die Abbildung der Projektionslinse **36'** in Verbindung mit der Spotblende **21'** beeinflusst und eingestellt. Das vom Wafer **3** direkt reflektierte Licht gelangt auf dem gleichen Weg zurück zur Lichtquelle, wobei eine Dunkelfeldblende **41** die Sicherheit erhöht. dass das direkt reflektierte Licht nicht zum Photodetektor **7** gelangt.

Vorhandene Obertlächeninhomogenitäten auf dem zu inspizierenden Wafer **3** streuen das einfallende Licht in den ganzen Halbraum oberhalb des Beleuchtungsflecks **24**. Um einen möglichst grossen Anteil des gestreuten Lichts zum Photodetektor **7** zu bringen, wird ein elliptischer Spiegel **42**. der rotationssymmatrisch um die optische Achse und oberhalb des Beleuchtungsflecks **24** und unterhalb der Strahlumlenkung **22** angeordnet ist, vorgesehen.
Dieser elliptische Spiegel **42** weist die Form eines Teils eines innen verspiegelten Rotationsellipsoids auf. Die Streustrahlen **b1** und **b2**, sowie alle diesbezüglich durch den elliptischen Spiegel **42** gesammelten Strahlen bilden den Beleuchtungsfleck **24** auf die Öffnung **25** der ersten Blende **6** ab.
Der ersten Blende **6** kommt dabei die Aufgabe zu, unerwünschtes Streulicht, das beispielsweise an den optischen Komponenten entsteht, vom Photodetektor **7** abzuhalten, hingegen das vom Beleuchtungsfleck **24** stammende Streulicht der Strahlen **b1** und **b2** durchzulassen.

Es ist übrigens eine Voraussetzung für die im folgenden aufzuzeigende erfindungsgemässe Lehre, die Lichtquellenzufuhr senkrecht zur Oberfläche des Messobjekts zu gewährleisten und die Lichtquelle und die Zufuhr des Lichtes statisch zu halten. während sich das zu inspizierende Objekt beim Scanvorgang spiralförmig unter dem Lichtstrahl vorbeibewegt. Die Rotationssymmetrie muss also erhalten bleiben.

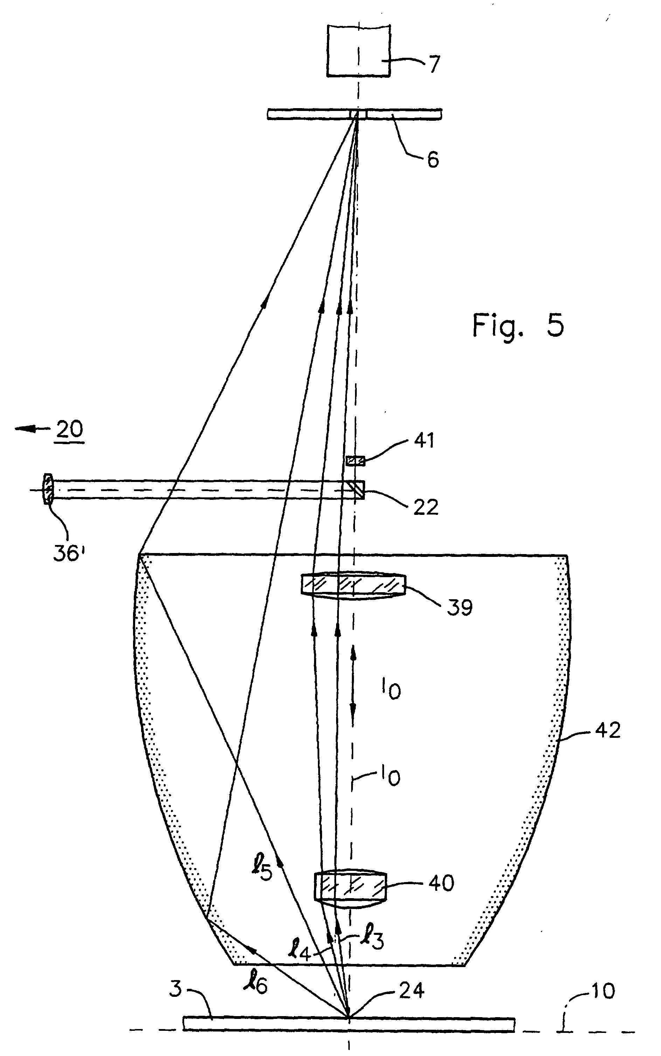

**Fig. 5** zeigt die Funktion von zwei Linsen **39** und **40** in Verbindung mit dem elliptischen Spiegel **42** und mit den als Streulichtstrahlen angedeuteten einzelnen Strahlen **b3, b4, b5** und **b6**.

Wesentlich neue Merkmale sind die beiden Linsen **39, 40** auf dem Lichtweg zwischen der Strahlumlenkung **22** und dem Beleuchtungsfleck **24,** eine erste Linse **39** und eine zweite Linse **40,** die auf der optischen Achse angeordnet sind und deren Funktion es ist, möglichst viel Licht einzusammeln. Genau das gleiche Ziel wird mit dem Einsatz eines elliptischen Spiegels **42**, der Teil eines Rotationsellipsoids mit einer Symmetrieachse, die parallel zur optischen Achse verläuft, ist und wobei die beiden Brennpunkte des Ellipsoids einerseits im Beleuchtungsfleck **24** und andererseits im Abbild **26** liegen, angestrebt und erreicht.

Durch den Einsatz der beiden Linsen **39** und **40** in Verbindung mit dem elliptischen Spiegel **42** wird der Sammelbereich erheblich erweitert.

Damit die Strahlen via elliptischer Spiegel die Fokusiereinheit, die sich auf der optischen Achse befindet, nicht treffen, sind zur Maximierung des Bereichs zwischen der Strahlumlenkung **22** und dem Beleuchtungsfleck **24** zwei Linsen notwendig. Die Position und die Brennweite dieser Linsen ist dabei so gewählt, dass die Fokusiereinheit auf der optischen Achse den Lichtfleck auch auf die erste Blende **6** vor dem Photosensor **7** abbildet. Die Dunkelfeldblende **41** -wenn nicht schon in der Strahlumlenkung integriert- verhindert, wie schon bei der Beschreibung der **Flg. 4,** dass das direkt reflektierte Laser-, beziehungsweise von optischen Komponenten gestreute Licht, auf den Photodetektor **7** gelangen kann.

Durch die Einführung einer ortsaufgelösten Messung mit beispielsweise Ersatz eines einfachen Photodelektors **7** durch Detektorarrays kann das Signal Rausch-Verhältnis weiter verbessert werden, da der Haze auf alle Detektoren gleich stark wirksam werden wird, der LPD (light point defect) aber bei einzelnen Detektoren mehr ansprechen wird.

Bei stark streuenden, zu inspizierenden Substraten kann es erforderlich sein, zwischen der Blende **6** und dem Photodetektor **7** mit Abschwächern zu arbeiten, um den Photodetektor im optimalen Arbeitsbereich betreiben zu können.

Mittels sphärischer/zylindrischer Unsen **38'** anstelle einer eigentlichen Zylinderlinse **38** beim Stand der Technik kann die Grösse und Form -wie schon zuvor beschrieben- des im Beleuchtungspunkt **24** auftretenden durch die Laserquelle **20** erzeugten Beleuchtungsspot um einen bestimmten Faktor verändert werden.

Durch die durch die vorerwähnten Massnahmen gesteigerte Intensität des auf dem Abbild **26** erscheinenden reflektierten Lichtes kann auch mit winkelaufgelöster Messung gearbeitet werden, Indem beispielsweise zwischen der ersten Blende **6** und dem Photosensor **7** Lichtleiter eingesetzt werden und damit die Möglichkeit besteht gewisse Streuwinkel zu eliminieren.

Oberhalb der ersten Blende **6** kann zur weiteren Veränderung der Konfiguration eine zweite Blende vorgesehen sein, um bestimmte Streuwinkelstrahlen zu eliminieren.

## Patentansprüche

1. Verfahren zur zerstörungsfreien Oberflächen-Inspektion, zur Messung von kleinen Partikeln, Defekten und Inhomogenitäten, die sich auf der Oberfläche und/oder In oberflächennahen Bereichen eines Messobjektes, insbesondere eines Silizium Wafers **(3)** befinden, mit einer einen Beleuchtungsstrahl erzeugenden Lichtquelle **(20)**, einer Strahlumlenkung **(22)**, einer zu einem senkrecht auf das Messobjekt einfallenden Beleuchtungsfleck **(24)** führenden Projektionsoptik, einem Photodetektor **(7)**, auf den das gesammelte Licht gerichtet wird, und einer Einrichtung mit der das Messobjekt durch eine koordinierte Translations- und Rotationsbewegung derart bewegt wird, dass die gesamte Oberfläche vom Beleuchtungsfleck **(24)** spiralförmig abgetastet wird,
**dadurch gekennzeichnet, dass** streulichtsammelnde Mittel **(39, 40, 42)** vorgesehen werden, die in der Lage sind, sowohl Streulicht mit kleinem Winkel (83, 84) nahe der optischen Achse, als auch Streulicht mit grossem Winkel (85, 86) zur optischen Achse, einzusammeln, und daß zwischen der Strahlumlenkung **(22)** und dem Beleuchtungsfleck **(24)** eines zu inspizierenden Wafers **(3)** wenigstens eine Linse **(39, 40)** so auf der optischen Achse angeordnet wird, dass die vom Messobjekt gestreuten achsnahen Strahlen **(b3, b4)** zum einzigen Photodetektor **(7)** gelenkt werden und dass im gleichen Bereich der Anordnung ein elliptischer Spiegel **(42)** vorgesehen wird, der die Linse(n) **(39, 40)** umgreift, als Sammeloptik für achsenfernere Strahlen dient und diese Strahlen ebenfalls zum Photodetektor **(7)**lenkt.

2. Einrichtung zur zerstörungsfreien Oberflächen-Inspektion, zur Messung von kleinen Partikeln, Defekten und Inhomogenitäten auf ebenen Messobjekten, insbesondere Silizium Wafern **(3)**, mit einer einen Beleuchtungsstrahl erzeugenden Lichtquelle **(20)**, einer Strahlumtenkung **(22)**, einem senkrecht auf das ebene Messobjekt einfallenden Beleuchtungsfleck **(24)** und einer Transportvorrichtung mit der das zu inspizierende Messobjekt, insbesondere ein Wafer **(3)**, durch eine koordinierte Translations- und Rotationsbewegung derart bewegt wird, dass die gesamte Oberfläche des Messobjekts **(3)** spiralförmig abgetastet wird und wobei ein Photodetektor **(7)** vorgesehen ist, auf den das gesammelte Licht richtbar ist,
**dadurch gekennzeichnet, dass** Streulichtsammelnde Mittel **(39, 40, 42)** vorgesehen sind die in der Lage sind, sowohl Streulicht mit kleinem Winkel **(b3, b4)** nahe der optischen Achse, als auch Streulicht mit grossem Winkel **(b5, b6)** zur optischen Achse, einzusammein, wobei zwischen der Strahlumlenkung **(22)** und dem Beleuchtungsfleck **(24)** eines zu Inspizierenden Wafers **(3)** wenigstens eine Linse **(39, 40)** so auf der optischen Achse angeordnet ist, dass die vom Messobjekt gestreuten achsnahen Strahlen **(b3, b4)** zum einzigen Photodetektor **(7)** gelenkt werden und dass im gleichen Bereich der Anordnung ein elliptischer Spiegel **(42)** vorgesehen ist, der die Linse(n) **(39, 40)** umgreitt, als Sammeloptik für achsenfernere Strahlen dient und diese Strahlen ebenfalls zum Photodetektor (7) lenkt.

3. Einrichtung nach Patentanspruch **2**,
**dadurch gekennzeichnet, dass**
eine erste Linse **(39)** im Bereich der Strahlumlenkung **(22)** und eine zweite Unse **(40)** im Bereich des Beleuchtungsflecks **(24)** vorgesehen ist

4. Einrichtung nach Patentanspruch **2** oder **3**
**dadurch gekennzeichnet, dass**
mittels einer zwischen Lichtquelle **(20)** und Strahlumlenkung **(22)** angeordneten Linse **(36')** die Grösse und die Form des Beleuchtungsflecks **(24)** variierbar ist

5. Einrichtung nach einem der Patentansprüche **2** bis **4**, **dadurch gekennzeichnet, dass**
zwischen Strahlumlenkung **(22)** und einer ersten Blende **(6)** vor dem Photodetektor **(7)** eine Dunkelfeldblende **(41)** vorgesehen ist, mittels der das vom Messobjekt **(3)** direkt reflektierte Ucht **(80)** gegen den Photodetektor **(7**) abschirmbar ist.

6. Enrichtung nach Patentanspruch **5**, **dadurch gekennzeichnet, dass**
der Photodetektor **(7)** aus einem, bei der ersten Blende **(6)** angeordneten Detektorarray besteht.

7. Einrichtung nach Patentanspruch **6**, **dadurch gekennzeichnet, dass**
oberhalb der ersten Blende **(6)** eine zweite Blende vorgesehen ist, mittels der bestimmte Streuwinkel unterdrückbar sind.

8. Einrichtung nach einem der Patentansprüche **2** bis **7**,
**dadurch gekennzeichnet, dass**
zwischen der ersten Blende **(6)** und dem Photodetektor **(7)** ein Abschwächer vorgesehen ist, der das auf den Photodetektor **(7)** auftreffende Streulicht reduziert.

9. Einrichtung nach einem der Patentansprüche **2** bis **8**,
**gekennzeichnet durch**
oberhalb der ersten Blende **(6)** angeordnete Lichtleiter, die Licht einem als Detektorarray ausgebildeten Photodetektor **(7)** zubringen, um eine winkelaufgelöste Streulichtmessung zu erreichen.

10. Einrichtung nach einem der Patentansprüche **2** bis **9**,
**dadurch gekennzeichnet, dass**
Mittel vorgesehen sind, so dass das auf das Messobjekt **(3)** einfallende Licht zirkular polarisiert ist.

11. Einrichtung nach einem der Patentansprüche **2**-**10**,
**dadurch gekennzeichnet, dass**
die Grösse und Form des Beleuchtungsflecks **(24)** durch eine, zwischen der Lichtquelle **(20)** und der Strahlumlenkung **(22)** angeordnete Linse **(36')** In Verbindung mit einer ebenfalls zwischen der Lichtquelle **(20)** und der Strahlumlenkung angeordneten Spotblende **(21')** wählbar ist.

## Claims

1. Method for non-destructive testing of surfaces, for measuring small particles, defects and inhomogenities situated on the surface and/or in surface-near regions of an object under measurement, especially a silicon wafer (3), by means of a light source (20) generating a light beam, a beam deflecting device (22), a projecting optics providing a light spot (24) incident perpendicular onto the object under measurement, a photodetector (7) onto which the converged light is directed, and a device for moving the object under measurement by coordinate translatoric and rotational movements such that the complete surface will be scanned spirally by the light spot (24),
**characterized in that**
scattered light converging means (39, 40, 42) are provided, which are capable to converge both light scattered under a small angle (83, 84) nearby the optical axis and light scattered under a great angle (85, 86) with respect to the optical axis, and that between the beam deflecting device (22) and the light spot (24) of a wafer (3) to be inspected at least one lens (39, 40) is arranged on the optical axis such that the beams (83, 84) scattered proximal the axis from the object under measurement are directed to the sole photodetector (7), and that an elliptical mirror (42) is provided in the same region of the arrangement, said mirror enclosing the lens(es) (39, 40), serving as a collecting optical device for distal beams being farer away from the axis, and directing these beams, too, to the photodetector (7).

2. Device for non-destructive testing of surfaces, for measuring small particles, defects and inhomogenities on flat objects of measurement to be inspected, especially silicon wafers (3), comprising a light source (20) generating a light beam, a beam deflecting device (22), a light spot (24) incident perpendicular onto the flat object under measurement, and a transporting device for moving the object under measurement, especially a wafer (3), by coordinate translatoric and rotational movements such that the complete surface of the object (3) under measurement will be scanned spirally, and wherein there is provided a photodetector (7), onto which the converged light can be directed,
**characterized in that**
scattered light converging means (39, 40, 42) are provided, which are capable to converge both light scattered under a small angle (83, 84) nearby the optical axis and light scattered under a great angle (85, 86) with respect to the optical axis, wherein between the beam deflecting device (22) and the light spot (24) of a wafer (3) to be inspected at least one lens (39, 40) is arranged on the optical axis such that the beams (83, 84) scattered proximal the axis from the object under measurement are directed to the sole photodetector (7), and that an elliptical mirror (42) is provided in the same region of the arrangement, said mirror enclosing the lens(es) (39, 40), serving as a collecting optical device for distal beams being farer away from the axis, and directing these beams, too, to the photodetector (7).

3. Device according to claim 2, **characterized in that** a first lens (39) is provided in the region of the beam deflecting device (22), and a second lens (40) is provided in the region of the light spot (24).

4. Device according to claim 2 or 3, **characterized in that** the size and the form of the light spot (24) are variable by means of a lens (36') arranged between the light source (20) and the beam deflecting device (22).

5. Device according to any of claims 2 to 4, **characterized in that** a dark-field stop (41) is provided between the beam deflecting device (22) and a first diaphragm (6) before the photodetector (7), by means of which stop (41) the light (80) directly reflected from the object (3) under measurement can be shielded from the photodetector (7).

6. Device according to claim 5, **characterized in that** the photodetector (7) consists of a detector array arranged at the first diaphragm (6).

7. Device according to claim 6, **characterized in that** above the first diaphragm (6) there is provided a second diaphragm, by means of which specific scattering angles may be suppressed.

8. Device according to any of claims 2 to 7, **characterized in that** an attenuator is provided between the first diaphragm (6) and the photodetector (7) to reduce the scattered light impinging on the photodetector (7).

9. Device according to any of claims 2 to 8, **characterized by** photoconductors arranged above the first diaphragm (6) and offering light to a photodetector (7) formed in the shape of a detector array, to attain an angularly resolved measurement of scattered light.

10. Device according to any of claims 2 to 9, **characterized in that** means are provided so that the light incident onto the object (3) under measurement is circularly polarized.

11. Device according to any of claims 2 to 10, **characterized in that** form and size of the light spot (24) can be chosen by a lens (36') arranged between the light source (20) and the beam deflecting device (22), in conjunction with a spot aperture (21') also arranged between the light source (20) and the beam deflecting device (22).

## Revendications

1. Procédé pour inspecter des surfaces sans les endommager, afin de mesurer de petites particules, défauts et défauts d'homogénéité qui se trouvent sur la surface et/ou dans les zones proches de la surface d'un objet à mesurer, notamment d'une plaquette de silicium (3), comprenant une source lumineuse (20) produisant un rayon lumineux, une déviation du rayon (22), une optique de projection projetant un point lumineux (24) verticalement sur l'objet à mesurer, un photodétecteur (7) vers lequel la totalité de la lumière est dirigée et un dispositif qui déplace l'objet à mesurer avec un mouvement de translation et de rotation coordonné de telle sorte que l'ensemble de la surface est balayée en spirale par le point lumineux (24), **caractérisé en ce que** des moyens rassemblant la lumière diffusée (39, 40, 42) sont prévus, qui sont capables de faire converger de la lumière diffusée avec un faible angle (13, 14) par rapport l'axe optique et de la lumière diffusée avec un angle important (15,16) par rapport à l'axe optique, **en ce qu'**entre la déviation du rayon (22) et le point lumineux (24) d'une plaquette à inspecter (3), au moins une lentille (39, 40) est placée sur l'axe optique de telle manière que les rayons proches de l'axe (13, 14) qui sont diffusés par l'objet à mesurer sont déviés vers l'unique photodétecteur (7), et **en ce que** l'on prévoit dans la même zone un miroir elliptique (42) qui entoure la (les) lentille(s) (39, 40), sert d'optique convergente pour des rayons éloignés de l'axe et dirige également ces rayons-là vers le photodétecteur (7).

2. Dispositif pour inspecter des surfaces sans les endommager, afin de mesurer de petites particules, défauts et défauts d'homogénéité qui se trouvent sur la surface et/ou dans les zones proches de la surface d'un objet à mesurer, notamment d'une plaquette de silicium (3), comprenant une source lumineuse (20) produisant un rayon lumineux, une déviation du rayon (22), une optique de projection projetant un point lumineux (24) verticalement sur l'objet à mesurer, et un dispositif qui déplace l'objet à inspecter, notamment une plaquette (3), avec un mouvement de translation et de rotation coordonné de telle sorte que l'ensemble de la surface de l'objet à mesurer (3) est balayée en spirale par le point lumineux (24), un photodétecteur (7) étant prévu vers lequel la lumière collectée est dirigée, **caractérisé en ce que** des moyens rassemblant la lumière diffusée (39, 40, 42) sont prévus, qui sont capables de faire converger de la lumière diffusée avec un faible angle (13, 14) par rapport l'axe optique et de la lumière diffusée avec un angle important (15, 16) par rapport à l'axe optique, **en ce qu'**entre la déviation du rayon (22) et le point lumineux (24) d'une plaquette à inspecter (3), au moins une lentille (39, 40) est placée sur l'axe optique de telle manière que les rayons proches de l'axe (13, 14) qui sont diffusés par l'objet à mesurer sont déviés vers l'unique photodétecteur (7), et **en ce que** l'on prévoit dans la même zone du dispositif un miroir elliptique (42) qui entoure la (les) lentille(s) (39, 40), sert d'optique convergente pour des rayons éloignés de l'axe et dirige également ces rayons-là vers le photodétecteur (7).

3. Dispositif selon la revendication 2, **caractérisé en ce qu'**une première lentille (39) est prévue au voisinage de la déviation du rayon (22) et une seconde lentille (40) dans la zone du point lumineux (24).

4. Dispositif selon la revendication 2 ou 3, **caractérisé en ce que** la taille et la forme du point lumineux (24) peuvent être modifiées à l'aide d'une lentille (36') placée entre la source lumineuse (20) et la déviation du rayon (22).

5. Dispositif selon l'une des revendications 2 à 4, **caractérisé en ce qu'**entre la déviation du rayon (22) et un premier diaphragme (6) situé devant le photodétecteur (7) est prévu un diaphragme à fond noir (41) au moyen duquel le photodétecteur (7) peut être protégé de la lumière directement réfléchie (80) par l'objet à mesurer (3).

6. Dispositif selon la revendication 5, **caractérisé en ce que** le photodétecteur (7) est composé d'une barrette de détecteurs placée au niveau du premier diaphragme (6).

7. Dispositif selon la revendication 6, **caractérisé en ce qu'**au-dessus du premier diaphragme (6) est prévu un second diaphragme permettant d'atténuer certains angles de diffusion.

8. Dispositif selon l'une des revendications 2 à 7, **caractérisé en ce qu'**entre le premier diaphragme (6) et le photodétecteur (7) est prévu un affaiblisseur qui réduit la lumière diffusée atteignant le photodétecteur (7).

9. Dispositif selon l'une des revendications 2 à 8, **caractérisé par** des guides de lumière placés au-dessus d'un premier diaphragme (6), qui amène la lumière vers un photodétecteur (7) réalisé en tant que barrette de détecteurs afin de mesurer la lumière diffusée avec une résolution angulaire.

10. Dispositif selon l'une des revendications 2 à 9, **caractérisé en ce que** des moyens sont prévus de manière à polariser de façon circulaire la lumière atteignant l'objet à mesurer (3).

11. Dispositif selon l'une des revendications 2 à 10, **caractérisé en ce que** la taille et la forme du point lumineux (24) peuvent être choisies par le biais d'une lentille (36') placée entre la source lumineuse (20) et la déviation du rayon (2), combinée avec un diaphragme (21') également situé entre la source lumineuse (20) et la déviation du rayon.
